# EUROPÄISCHE PATENTSCHRIFT

(11) **EP 1 875 952 B1**
(45) Veröffentlichungstag und Bekanntmachung des Hinweises auf die Patenterteilung: **18.05.2011**
(21) Anmeldenummer: 07111585.1
(22) Anmeldetag: 03.07.2007
(51) Int. Cl.: B01D 27/08

(54) **Wechselfilter**
Disposable filter
Filtre jetable

(30) Priorität: 06.07.2006 DE 202006010561 U
(43) Veröffentlichungstag der Anmeldung: 09.01.2008
(73) Patentinhaber: MANN+HUMMEL GmbH, 71638 Ludwigsburg (DE)
(72) Erfinder: Wolf, Michael, 66539, Neunkirchen (DE); Schärlund, Jukka, 76877, Offenbach (DE)

(56) Entgegenhaltungen:
- JP-A- 9 024 210
- JP-A- 10 151 303

## Beschreibung

### Technisches Gebiet

Die Erfindung betrifft einen Wechselfilter für Flüssigkeiten, insbesondere für Schmieröl einer Brennkraftmaschine nach dem Oberbegriff des Anspruches 1.

### Stand der Technik

Es sind Wechselfilter bekannt, welche über ein, in einem Gehäuse angeordnetes Filterelement verfügen. Das Filterelement dient der Abscheidung von Verunreinigungen aus dem Schmieröl. Das Gehäuse weist einen Deckel und einen Topf auf, welcher durch eine Bördelverbindung mit dem Deckel verbunden ist. In dem Deckel sind ein Ölein- und ein Ölauslässe angeordnet, durch welche das zu reinigende Öl in den Wechselfilter ein bzw. aus dem Wechselfilter ausströmen kann. Weiterhin ist auf dem Deckel eine Dichtung angeordnet, durch welche der Wechselfilter dichtend an einem Flansch befestigt werden kann. Die Dichtungen sind im Allgemeinen vorgefertigte rechteckförmige Dichtungen, welche in eine Nut in dem Deckel eingelegt werden. Bei der Montage des Wechselfilters wird die Dichtung zwischen dem Deckel und dem Flansch verpresst, wodurch die Abdichtung erzeugt wird. Da die Dichtung über den Deckel übersteht, kommt die Dichtung zur Anlage an dem Flansch, bevor der Wechselfilter mit einem ausreichenden Drehmoment an dem Flansch angeschraubt ist. Um den Wechselfilter dann mit dem ausreichenden Drehmoment anzuziehen, treten große Scherkräfte an der Dichtung auf, welche zu Beschädigungen der Dichtung führen können. Weiterhin besteht das Problem, dass es bei extrem großen Anzugsmomenten zu Risshildung in dem Bördelbereich kommen kann. Aus der JP 10-151303 A ist ein Ölfilter bekannt, welcher eine Dichtung in einer Dichtnut aufweist, wobei die innere Wand der Dichtnut zum Abstützen auf einem Sockel dient. Aus der JP 09-024210 A ist ein Wechselfilter bekannt, welcher eine ringförmige Dichtung aufweist, welche in einer Nut angeordnet ist und bei der Montage elastisch deformiert wird.

Aufgabe der Erfindung ist es, einen Wechselfilter zu schaffen, welcher einfach in der Handhabung ist und die oben genannten Nachteile vermeidet. Diese Aufgabe wird durch die Merkmale des Anspruches 1 gelöst.

### Offenbarung der Erfindung

Der erfindungsgemäße Wechselfilter dient der Reinigung von Flüssigkeiten, insbesondere von Schmieröl in Brennkraftmaschinen. Der Wechselfilter verfügt über ein Gehäuse mit einem Topf, einem Deckel und einer Dichtung. In dem Gehäuse ist ein Filterelement zur Reinigung des Schmieröls angeordnet. Der Deckel verfügt über einen Fluideinlass und einen Fluidauslass, wobei der Fluideinlass durch das Filterelement dichtend von dem Fluidauslass getrennt ist. Zur Aufnahme der Dichtung verfügt der Deckel über eine Nut mit einem Nutquerschnitt, wobei die Nut als Dichtungshalter ausgebildet ist. Der Deckel kann über eine Deckelplatte verfügen, in welche die Ein- und Auslässe integriert sind. Der Dichtungshalter kann einstückig mit der Deckelplatte ausgeführt oder als gesondertes Bauteil ausgestaltet sein. Bei einer gesonderten Ausführung des Dichtungshalters ist dieser dann mit der Deckelplatte und oder dem Topf verbunden. Die Dichtung besitzt einen Dichtungsquerschnitt, welcher sich in einen von der Nut umgebenen Bereich und einen, über die Nut hinausragenden Bereich aufteilt. Der gesamte Dichtungsquerschnitt ist gleich dem Nutquerschnitt, so dass bei entsprechender Krafteinwirkung der gesamte Dichtungsquerschnitt in die Nut komprimierbar ist. Bei der Montage des Wechselfilters kann somit der über die Nut ragende Bereich der Dichtung vollständig in die Nut gepresst werden, wodurch die Dichtung durch ihre Eigenspannung dichtend an dem angrenzenden Bauteil anliegt, jedoch nicht zu stark verpresst wird. Weiterhin kommt der Deckel bzw. der Dichtungshalter zur Anlage an dem angrenzenden Bauteil, wodurch eine Versteifung des Systems erreicht wird und die Rissbildung im Verbindungsbereich des Deckels mit dem Topf verhindert wird.

Erfindungsgemäß verfügt die Dichtung über einen oder mehrere Aussparungsquerschnitte. Der Aussparungsquerschnitt kann beliebig ausgestaltet sein. Hierbei kann der Aussparungsquerschnitt vollständig von der Dichtung umschlossen sein. Bei dieser Ausführung ist der Aussparungsquerschnitt als Blase ausgeführt. Bei anderen Ausgestaltungen kann der Aussparungsquerschnitt auch direkt an die Nutwand oder den Nutgrund angrenzen. Bei anderen Ausgestaltungen grenzt der Aussparungsquerschnitt direkt an den Nutgrund an. Hierbei kann der Aussparungsquerschnitt z.B. u-förmig oder s-förmig ausgebildet sein. Durch den Aussparungsquerschnitt wird die Dichtung derart komprimiert, dass die Dichtung vollständig in den Nutquerschnitt verpresst wird, wobei die Dichtung in der Nut exakt positioniert und fixiert ist.

Bei einer besonderen Ausgestaltung der Dichtung, verfügt der über die Nut hinausragende Bereich über eine Abschrägung, wodurch die Kontaktfläche der Dichtung zu einem angrenzenden Bauteil, insbesondere einem Flansch, geringer ist, als die Grundfläche der Dichtung in der Nut. Somit verringert sich bei der Montage die Reibung zwischen dem Wechselfilter und dem angrenzenden Bauteil.

Gemäß einer weiteren Ausgestaltung der Erfindung entspricht die Abschrägung im Querschnitt einem Trapez. Durch die Trapezform lässt sich die Dichtung bei der Montage symmetrisch komprimieren, wodurch eine gleichmäßige Anlage der Dichtung erzeugt und somit eine bessere Kraftverteilung erreicht ist.

Gemäß einer Ausgestaltung verfügt die Dichtung im nicht montierten Zustand des Wechselfilters über einen Innendurchmesser, welcher größer ist, als ein Außendurchmesser der Nut des Dichtungshalters. Somit ist zwischen der Dichtung und dem Außendurchmesser der Nut ein inneres Zwischenvolumen gebildet, welches bei der Montage des Wechselfilters durch das über die Nut ragende Dichtungsmaterial zumindest teilweise ausgefüllt wird. Somit können die Montagekräfte zum Anziehen des Wechselfilters verringert werden.

Bei einer Ausbildung ist der Außendurchmesser der Dichtung kleiner, als der Innendurchmesser der Nut des Dichtungshalters. Somit bildet sich, analog zu dem oben beschriebenen Zwischenvolumen, ein äußeres Zwischenvolumen, in welches sich die Dichtung ausdehnen kann. Hierbei können die Zwischenvolumen auch miteinander kombiniert werden, so dass sich die Dichtung in beide Richtungen ausdehnen kann.

### Kurze Beschreibung der Zeichnungen

Der Stand der Technik und weitere Einzelheiten der Erfindung werden nachfolgend anhand der Figuren beschrieben. Hierbei zeigt

Figur 1 einen Ausschnitt eines bekannten Wechselfilters im Schnitt,

Figur 2 eine weitere bekannte Ausgestaltung des Dichtungsbereichs im Schnitt,

Figur 3 einen Ausschnitt eines bekannten Wechselfilters im montierten Zustand,

Figur 4a eine erfindungsgemäße Ausgestaltung des Dichtungsbereiches im Schnitt,

Figur 4b den Dichtungsbereich gemäß Figur 4a in montiertem Zustand,

Figur 5a eine weitere erfindungsgemäße Ausgestaltung des Dichtungsbereiches im Schnitt und

Figur 5b den Dichtungsbereich gemäß Figur 5a in montiertem Zustand. Ausführungsform(en) der Erfindung

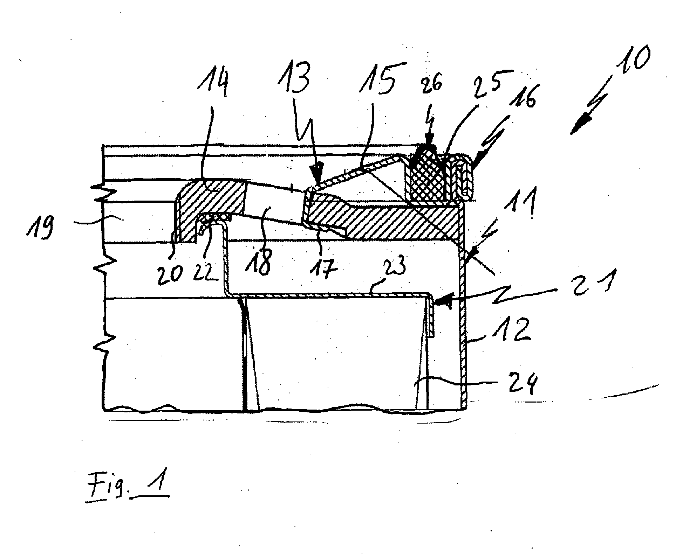

In Figur 1 ist ein Ausschnitt eines Wechselfilters 10 im Schnitt dargestellt. Der Wechselfilter 10 verfügt über ein Gehäuse 11 mit einem Topf 12 und einem Deckel 13. Der Deckel 13 weist eine Deckelplatte 14 und einen Dichtungshalter 15 auf. Der Dichtungshalter 15 ist mit dem Topf 12 mittels einer Bördelverbindung 16 verbunden. Weiterhin ist der Dichtungshalter 15 mit der Deckelplatte 14 verklemmt. Hierzu greift eine Lasche 17 in eine, in der Deckelplatte 14 angeordnete Einlassöffnung 18 ein. Neben der Einlassöffnung 18 verfügt die Deckelplatte 14 auch noch über eine zentral angeordnete Auslassöffnung 19. Die Auslassöffnung 19 ist durch ein Befestigungsgewinde 20 umschlossen, mit welchem der Wechselfilter 10 an einem Befestigungsflansch (nicht dargestellt) angeschraubt werden kann. Innerhalb des Gehäuses 11 ist ein Filterelement 21 angeordnet, wobei das Filterelement 21 mit seiner Endscheibe 23 unter Verwendung einer Flachdichtung 22 an der Deckelplatte 14 dichtend anliegt. Die Endscheibe 23 ist mit einem zickzackförmig gefalteten und ringförmig geschlossenen Filtermedium 24 dichtend verbunden.

In dem Dichtungshalter 15 ist eine Dichtung 25 angeordnet. Die Dichtung 25 verfügt über einen abgeschrägten, trapezförmig ausgebildeten Bereich 26, welcher teilweise über den Dichtungshalter 15 hinausragt.

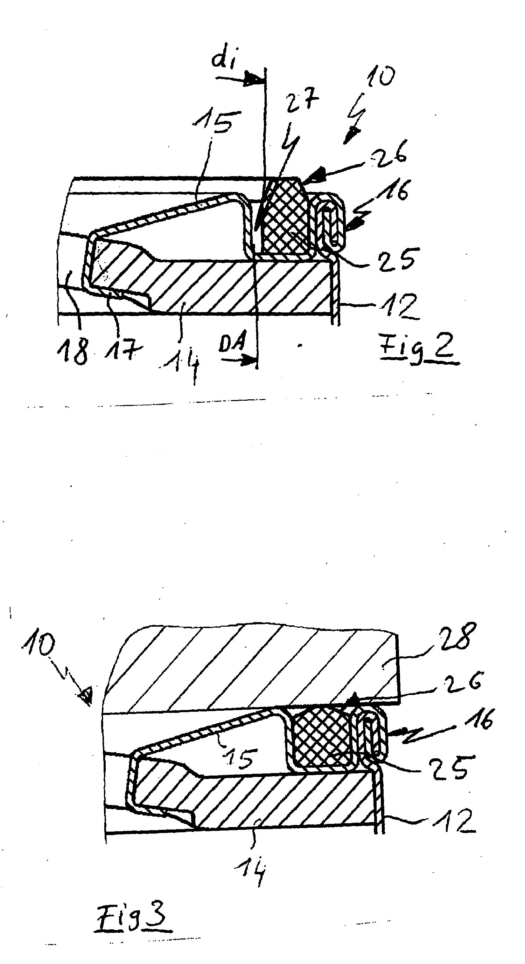

In Figur 2 ist eine weitere Ausgestaltung des Dichtungsbereichs im Schnitt dargestellt. Der Figur 1 entsprechende Bauteile sind mit gleichen Bezugszeichen versehen. Die Dichtung 25 verfügt über einen Innendurchmesser di, welcher größer ist, als ein Außendurchmesser DA des Dichtungshalters 15, welcher eine Nut 27 zur Aufnahme der Dichtung 25 bildet. Der abgeschrägte Bereich 26 ragt über die Nut 27 des Dichtungshalters 15 hinaus. Hierbei entspricht der, die Nut 27 überragende Querschnitt der Dichtung 25 dem zwischen Außendurchmesser DA und Innendurchmesser di gebildeten Querschnitt.

In Figur 3 ist der Ausschnitt gemäß Figur 2 im montierten Zustand dargestellt. Der Figur 2 entsprechende Bauteile sind mit gleichen Bezugszeichen versehen. Der Wechselfilter 10 ist an einem Flansch 28 fixiert, wobei die Dichtung 25 derart verpresst ist, dass das Material der Dichtung 25 die Nut 27 ausfüllt und der abgeschrägte Bereich 26 den Flansch 28 dichtend kontaktiert. Der Dichtungshalter 15 kommt direkt zur Anlage an dem Flansch 28, wodurch das Befestigungssystem versteift ist und Relativbewegungen zwischen dem Wechselfilter 10 und dem Flansch 28 verhindert werden. Der Dichtungshalter 15 bildet durch seine Anlage an dem Flansch 28 einen Anschlag, welcher ein Überdrehen des Wechselfilters 10 bei der Montage verhindert.

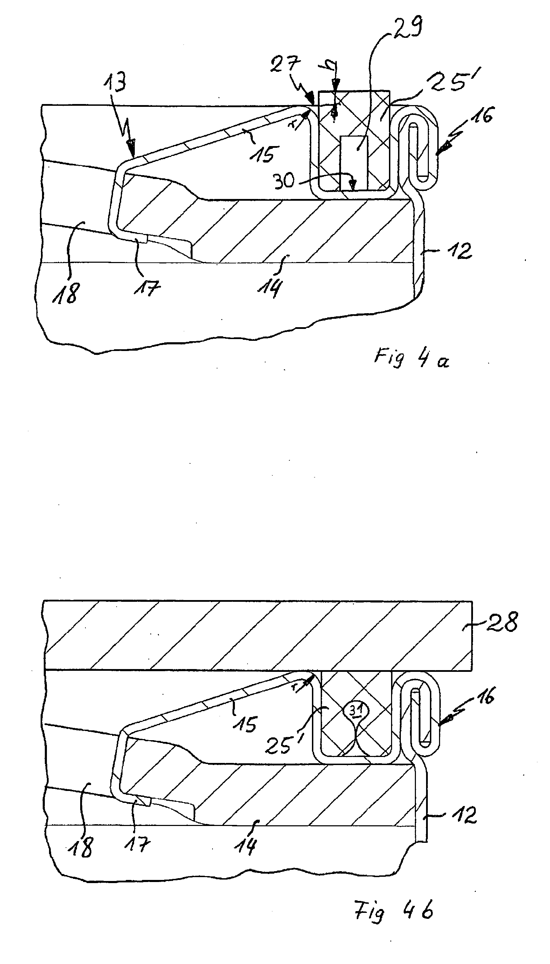

In Figur 4a ist eine weitere Ausgestaltung des Dichtungsbereiches im Schnitt dargestellt. Bauteile, welche den vorherigen Figuren entsprechen, sind mit gleichen Bezugszeichen versehen. Die Dichtung 25' verfügt über einen rechteckigen Dichtungsquerschnitt, wobei ein ebenfalls rechteckiger bzw. u-förmiger Aussparungsquerschnitt 29 vorgesehen ist. Der Aussparungsquerschnitt 29 weist zum Nutgrund 30, wodurch zwischen dem Nutgrund 30 und der Dichtung 25' ein verdrängbares Volumen gebildet ist. Die Dichtung 25' verfügt über einen, über die Nut 27 hinausragenden Bereich h, welcher einen kleineren Querschnitt, als der Aussparungsquerschnitt 29, aufweist.

In Figur 4b ist der Dichtungsbereich gemäß Figur 4a in montiertem Zustand dargestellt. In dieser montierten Darstellung ist der über die Nut 27 hinausragende Bereich h durch den angrenzenden Flansch 28 in die Nut 27 hineingedrückt. Die, den Aussparungsquerschnitt 29 umgebenden Bereiche der Dichtung 25' wurden komprimiert und sind in den Aussparungsquerschnitt 29 ausgewichen. Hierbei legen sich die angrenzenden Bereiche aneinander an und bilden einen tropfenförmigen Restquerschnitt 31.

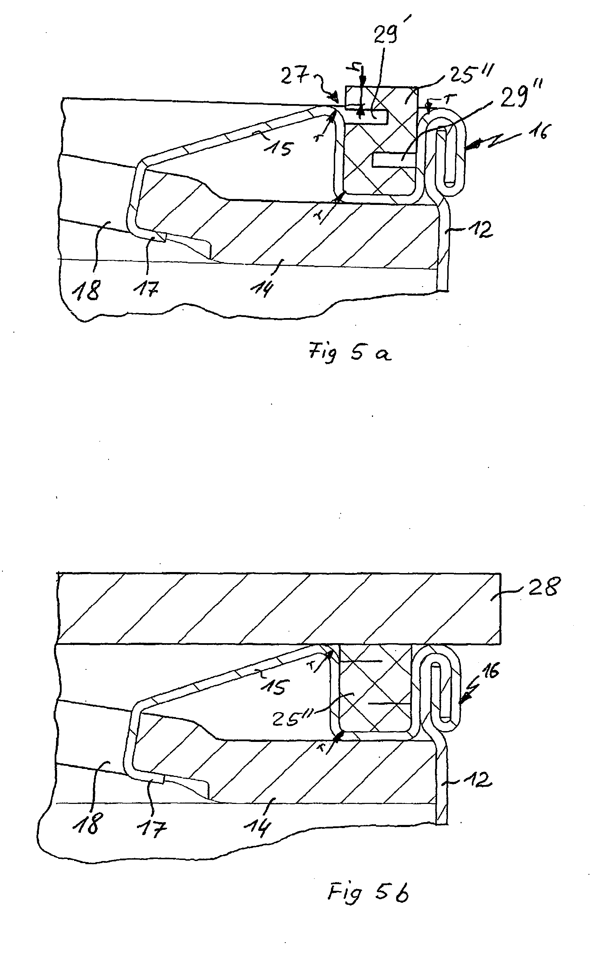

In Figur 5a ist eine weitere Ausgestaltung des Dichtungsbereiches im Schnitt dargestellt. Bauteile, welche den vorherigen Figuren entsprechen, sind mit gleichen Bezugszeichen versehen. Die Dichtung 25" ist bei diesem Ausführungsbeispiel s-förmig ausgebildet. Hierbei verteilt sich der Aussparungsquerschnitt 29 auf einen linken Querschnitt 29'und einen rechten Querschnitt 29". Durch diese Ausgestaltung der Dichtung 25" liegen alle, die Nut 27 kontaktierenden Seiten direkt an der Nut 27 an, wodurch eine gute Führung der Dichtung 25" sicher gestellt ist.

In Figur 5b ist der Dichtungsbereich gemäß Figur 5a in montiertem Zustand dargestellt. Die Aussparungsquerschnitte 29'und 29" wurden bei der Montage vollständig durch den über die Nut 27 hinausragenden Bereich h verdrängt, so dass im montierten Zustand kein Restquerschnitt 31 gemäß Figur 4b verbleibt, sondern die Dichtung 25" als rechteckiger Dichtungsblock in der Nut 27 verbleibt.

Bei allen Ausführungsbeispielen verfügt die Nut 27 über Übergangsradien, r welche die Herstellung der Nut 27 vereinfachen. Der durch die Radien entstehende Querschnitt wurde nicht als Nutquerschnitt bezeichnet. Bei anderen Ausführungen können diese Übergangsradien jedoch ebenfalls zu dem Nutquerschnitt gerechnet werden, wobei die Dichtung 25 auch in diese Querschnitte gedrückt werden kann.

## Patentansprüche

1. Wechselfilter (10) für Flüssigkeiten, insbesondere für Schmieröl bei Brennkraftmaschinen, aufweisend ein Gehäuse (11) mit einem Topf (12), einem Deckel (13) und einer Dichtung (25),
- wobei der Deckel (13) über zumindest einen Einlass (18) und einen Auslass (19) verfügt,
- wobei ein Filterelement (21) derart in dem Gehäuse (11) angeordnet ist, dass der Einlass (18) dichtend von dem Auslass (19) getrennt ist,
- wobei der Deckel (13) über eine Nut (27) mit einem Nutquerschnitt zur Aufnahme der Dichtung (25) verfügt
- wobei die Dichtung (25) über einen Dichtungsquerschnitt verfügt, welcher kleiner oder gleich dem Nutquerschnitt ist
**dadurch gekennzeichnet, dass**
die Dichtung über mindestens einen Aussparungsquerschnitt verfügt, wobei die Dichtung derart komprimierbar ist, dass die Dichtung vollständig in den Nutquerschnitt verpresst wird, wobei die Dichtung in der Nut exakt positioniert und fixiert ist.

2. Wechselfilter (10) nach Anspruch 1, **dadurch gekennzeichnet, dass** die Dichtung über einen rechteckigen Dichtungsquerschnitt verfügt und der Aussparungsquerschnitt rechteckig ausgebildet ist.

3. Wechselfilter(10) nach Anspruch 2, **dadurch gekennzeichnet, dass** der Aussparungsquerschnitt zum Nutgrund weist.

4. Wechselfilter (10) nach Anspruch 1, **dadurch gekennzeichnet, dass** die Dichtung s-förmig ausgebildet ist, wobei die Dichtung einen linken Aussparungsquerschnitt (29") und einen rechten Aussparungsquerschnitt (29") aufweist.

5. Wechselfilter nach Anspruch 4, **dadurch gekennzeichnet, dass** alle die Nut (27) kontaktierenden Seiten der Dichtung direkt an der Nut (27) anliegen.

## Claims

1. Spin-on filter (10) for liquids, in particular for lubricating oil in internal combustion engines, featuring a housing (11) with a pot (12), a cover (13), and a sealing (25),
- the cover (13) having at least one inlet (18) and one outlet (19),
- a filter element (21) being disposed in the housing (11) such that the inlet (18) is sealingly separated from the outlet (19),
- the cover (13) having a groove (27) with a groove cross section for receiving the sealing (25),
- the sealing (25) having a sealing cross section which is smaller than or equal to the groove cross section,
**characterized in that**
the sealing has at least one recess cross section, the sealing being compressable such that the sealing is completely pressed into the groove cross section, the sealing being exactly positioned and fixed in the groove.

2. Spin-on filter (10) according to claim 1, **characterized in that** the sealing has a rectangular sealing cross section and that the recess cross section is rectangular.

3. Spin-on filter (10) according to claim 2, **characterized in that** the recess cross section points towards the groove base.

4. Spin-on filter (10) according to claim 1, **characterized in that** the sealing s-shaped, the sealing featuring a left recess cross section (29') and a right recess cross section (29").

5. Spin-on filter according to claim 4, **characterized in that** all sides of the sealing contacting the groove (27) directly butt against the groove (27).

## Revendications

1. Filtre à cartouche remplaçable (10) pour liquides, notamment pour huile lubrifiante de moteurs à combustion interne, présentant un boîtier (11) avec un pot (12), un couvercle (13) et un joint d'étanchéité (25),
- le couvercle (13) disposant au moins d'une entrée (18) et d'une sortie (19),
- l'élément filtrant (21) étant disposé dans le boîtier (11) de sorte que l'entrée (18) soit séparée de manière étanche de la sortie (19),
- le couvercle (13) disposant d'une rainure (27) avec une section de rainure permettant de réceptionner le joint d'étanchéité (25),
- le joint d'étanchéité (25) étant pourvu d'une section de joint qui est plus petite ou de la même taille que la section de la rainure,
**caractérisé en ce que**
le joint d'étanchéité est doté d'au moins une section d'évidement, le joint d'étanchéité pouvant être comprimé de sorte que le joint d'étanchéité soit entièrement pressé dans la section de la rainure, le joint d'étanchéité étant positionné avec précision et fixé dans la rainure.

2. Filtre à cartouche remplaçable (10) selon la revendication 1, **caractérisé en ce que** le joint d'étanchéité dispose d'une section rectangulaire et que la section d'évidement est réalisée en forme de rectangle.

3. Filtre à cartouche remplaçable (10) selon la revendication 2, **caractérisé en ce que** la section d'évidement est dirigée vers le fond de la rainure.

4. Filtre à cartouche remplaçable (10) selon la revendication 1, **caractérisé en ce que** le joint d'étanchéité est réalisé en forme de s, le joint d'étanchéité présentant une section d'évidement gauche (29') et une section d'évidement droite (29").

5. Filtre à cartouche remplaçable selon la revendication 4, **caractérisé en ce que** tous les côtés du joint d'étanchéité étant en contact avec la rainure (27) sont directement appliqués sur la rainure (27).
